# FASCICULE DE BREVET EUROPEEN

(11) **EP 0 684 154 B1**
(45) Date de publication et mention de la délivrance du brevet: **19.08.1998**
(21) Numéro de dépôt: 95401231.6
(22) Date de dépôt: 26.05.1995
(51) Int. Cl.: B60N 2/48, B68F 1/00

(54) **Procédé de réalisation d'une enveloppe torique, notamment d'appui-tête pour siège de véhicule automobile**
Verfahren zum Herstellen einer toroidförmigen Umhüllung, insbesondere für eine Kfz-Kopfstütze
Process for making a toric envelope, especially for a car headrest

(30) Priorité: 26.05.1994 FR 9406381
(43) Date de publication de la demande: 29.11.1995
(73) Titulaire: CENTRE D'ETUDES ET RECHERCHE POUR L'AUTOMOBILE ( CERA), F-51100 Reims (FR)
(72) Inventeur: Patte, Damien, F-02190 Guignicourt (FR); Lamanda, Nicole, F-59141 Iwuy (FR)
(74) Mandataire: Geismar, Thierry

(56) Documents cités:
- FR-A- 2 623 437

## Description

La présente invention concerne un procédé de réalisation d'une enveloppe torique en particulier pour appui-tête, notamment pour siège de véhicule automobile.

Par appui-tête torique, on entend un appui-tête présentant une ouverture en son centre et possédant par conséquent sensiblement la forme générale d'un tore déformé ou d'un anneau.

Un tel appui-tête ne doit pas avoir de couture apparente. Par conséquent, ou bien on réalise une telle couture extérieure et on la recouvre d'un jonc en matière plastique, ou bien la couture est localement remplacée par un moyen de fermeture autre, tel qu'une fermeture à glissière. On rappelle que dans une couture extérieure, le matériau de l'enveloppe est cousu envers sur envers et à l'extérieur de l'enveloppe finie.

Ces solutions présentent toutefois l'inconvénient d'être peu satisfaisantes sur le plan esthétique, et surtout d'être onéreuses.

Il est par ailleurs difficile de mouler la masse de garniture in-situ, c'est-à-dire directement à l'intérieur de l'enveloppe.

On a également proposé dans le document FR-A-2 623 437 de réaliser une enveloppe torique sans couture extérieure. A cet effet, on réalise deux parties d'enveloppe tubulaires distinctes sur leur endroit, puis on fait passer l'extrémité d'une partie dans une extrémité de l'autre, ces deux extrémités étant ensuite ressorties de cette autre partie par une fente et cousues entre elles. Enfin, la même opération est réalisée avec les deux autres extrémités des deux parties.

Ces multiples opérations sont toutefois complexes, en particulier losqu'il s'agit de faire ressortir les extrémités par la fente. En outre, cette dernière doit être de grandes dimensions.

La présente invention vise à pallier ces inconvénients.

A cet effet, l'invention a tout d'abord pour objet un procédé de réalisation d'une enveloppe torique, notamment pour appui-tête de siège de véhicule automobile, caractérisé par le fait qu'il comprend les étapes consistant à :
a) former dans le matériau de l'enveloppe, une ébauche constituée d'un tore ouvert le long de deux lèvres à sa périphérie extérieure, les coutures de l'ébauche, endroit sur endroit, étant à l'intérieur du tore ;
b) retourner l'ébauche pour la mettre sur son envers en ramenant un demi-tore à l'intérieur de l'autre demi-tore, avec les deux lèvres de nouveau en vis à vis ;
c) coudre les deux lèvres endroit sur endroit en faisant, au fur et à mesure que cela est nécessaire, sortir le demi-tore intérieur du demi-tore extérieur à une de leurs extrémités, tout en ramenant le demi-tore extérieur à son intérieur à l'autre extrémité ;
d) retourner la pièce ainsi obtenue en la faisant traverser un orifice préalablement ménagé à cet effet dans sa surface.

Par "périphérie extérieure" du tore, on entend la ligne faisant le tour du tore à l'extérieur de celui-ci. On remarquera toutefois que toute ligne faisant le tour du tore peut être amenée à sa périphérie extérieure par rotation du tore sur luimême autour de sa ligne médiane.

On a constaté que l'enveloppe d'un volume torique pouvait être entièrement cousue à l'envers, les coutures étant donc faites endroit sur endroit, et que cette enveloppe pouvait ensuite être retournée en la faisant traverser un orifice de faible dimension. Tous les assemblages sont donc effectués par coutures et celles-ci sont bien à l'intérieur de l'enveloppe une fois celle-ci terminée.

Le procédé selon l'invention présente en outre l'avantage que l'enveloppe qui en résulte peut être utilisée notamment pour un moulage in-situ dans lequel l'enveloppe est placée à la surface d'un moule et la mousse de garniture est directement injectée dans l'enveloppe. Aucune opération ultérieure d'enveloppement de la mousse n'est donc nécessaire. L'enveloppe peut également être utilisée pour un moulage traditionnel.

L'orifice est de préférence ménagé le long d'une couture, soit lors de l'étape a), soit lors de l'étape c).

Les lèvres en vis à vis sont de préférence munies de prolongements à l'emplacement dudit orifice.

Ces prolongements forment des sortes de languettes en vis à vis qui, lorsque la mousse est déposée à l'intérieur de l'enveloppe et fait prise, sont pressées l'une contre l'autre depuis l'intérieur de l'enveloppe, ce qui a pour effet de fermer définitivement l'orifice.

Bien entendu, l'enveloppe selon l'invention peut être utilisée à la fabrication d'un appui-tête de siège de véhicule automobile, ou dans tout autre domaine tel que celui de l'ameublement.

On décrira maintenant à titre d'exemple non limitatif un mode de réalisation particulier de l'invention en référence aux dessins annexés dans lesquels :
- les figures 1a à 1e illustrent, avant leur assemblage, les différentes pièces constitutives d'une enveloppe d'appui-tête selon l'invention,
- la figure 2 est une vue en perspective d'un appui-tête fini,
- la figure 3 représente schématiquement un tore ouvert le long de sa périphérie extérieure,
- la figure 4 est une vue du tore de la figure 3 en coupe dans le plan passant par sa ligne périphérique extérieur, c'est-à-dire en coupe selon la ligne IV-IV de la figure 5,
- la figure 5 est une vue du tore de la figure 3 en coupe par un plan passant par l'axe du tore, c'est-à-dire en coupe selon la ligne V-V de la figure 4,
- la figure 6 est une vue de l'ébauche après retournement, en coupe selon la ligne VI-VI de la figure 7,
- la figure 7 est une vue en coupe selon la ligne VII-VII de la figure 6, et
- la figure 8 est une vue correspondant à la figure 7, après couture des lèvres périphériques.

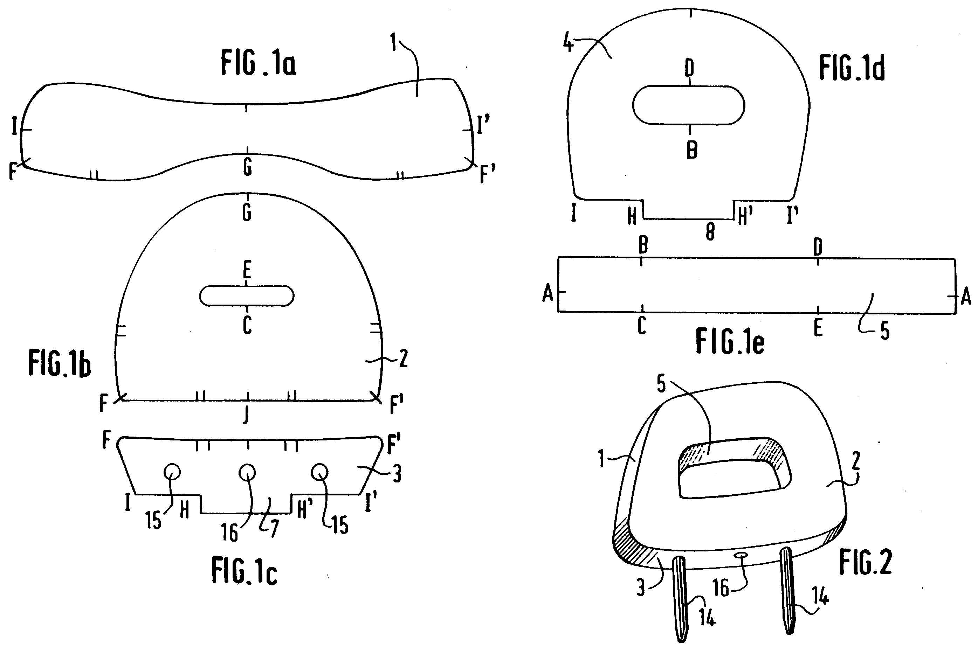

L'enveloppe de l'appui-tête de la figure 2 est constituée d'une bande périphérique supérieure 1, d'un devant 2, d'une bande périphérique inférieure 3, d'un dos 4 et d'une bande périphérique intérieure 5. Les pièces 1 à 5 sont tout d'abord assemblées de la manière qui suit, de manière à former un tore ouvert le long des deux lèvres de sa périphérie extérieure. Toutes les coutures qui vont être décrites sont réalisées endroit sur endroit, de manière à se trouver à l'intérieur de l'enveloppe dans le produit fini.

La bande périphérique intérieure 5 est tout d'abord conformée en anneau en cousant ses extrémités aux points A. Cette bande périphérique intérieure est ensuite assemblée au dos 4, en cousant des points B aux points D, puis de nouveau aux points B. La bande intérieure 5 est ensuite assemblée au devant 2 en cousant des points C aux points E, puis de nouveaux des points E aux points C. On assemble ensuite la bande périphérique extérieure supérieure 1 en cousant de F en G, puis de G en F'.

Enfin, la bande périphérique extérieure inférieure 3 est assemblée à l'ensemble ainsi réalisé en la cousant de F en I et de F' en I', à la bande supérieure 1, et de I en I' au dos 4. Cette dernière couture est toutefois interrompue de H en H', où la bande 3 forme une languette 7 en saillie et où le dos 4 forme une languette 8 également en saillie. On verra ci-après l'usage des saillies 7 et 8.

D'autres découpes peuvent être adoptées pour obtenir l'ébauche décrite ci-dessus.

En simplifiant les formes, on obtient le volume représenté à la figure 2, à laquelle on a ajouté des lignes de surface de manière à mieux le représenter dans l'espace.

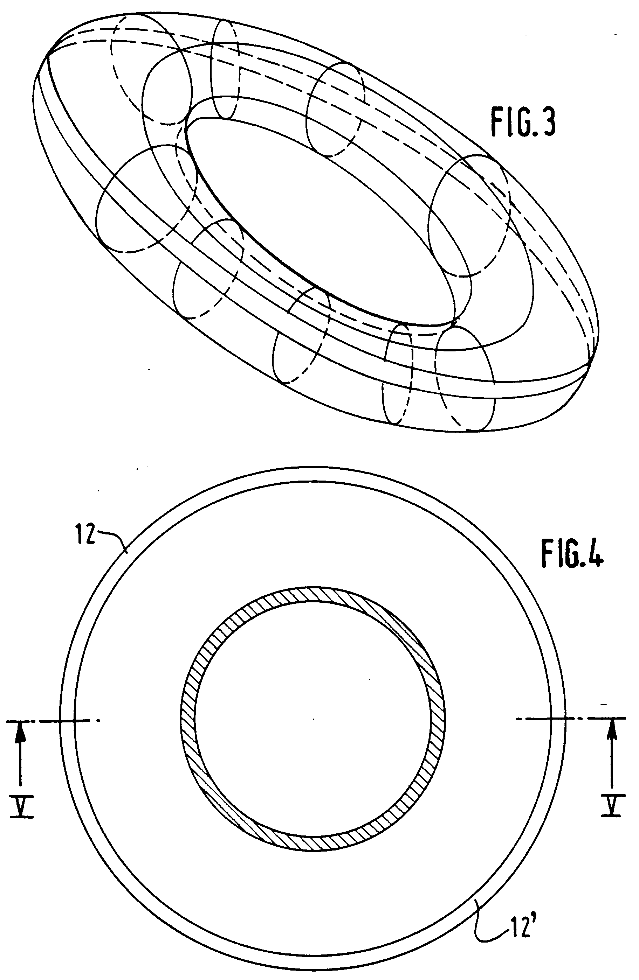

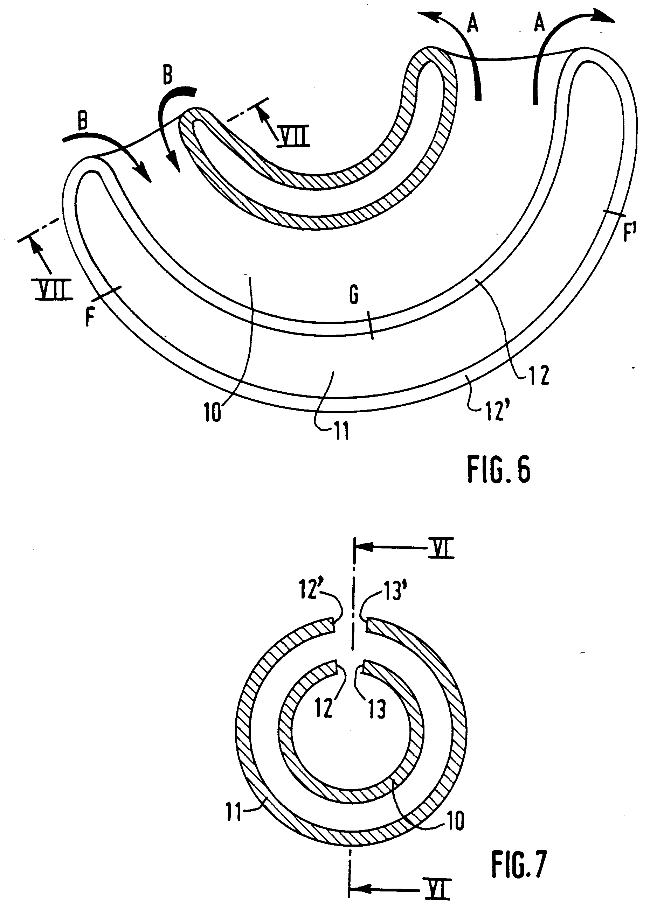

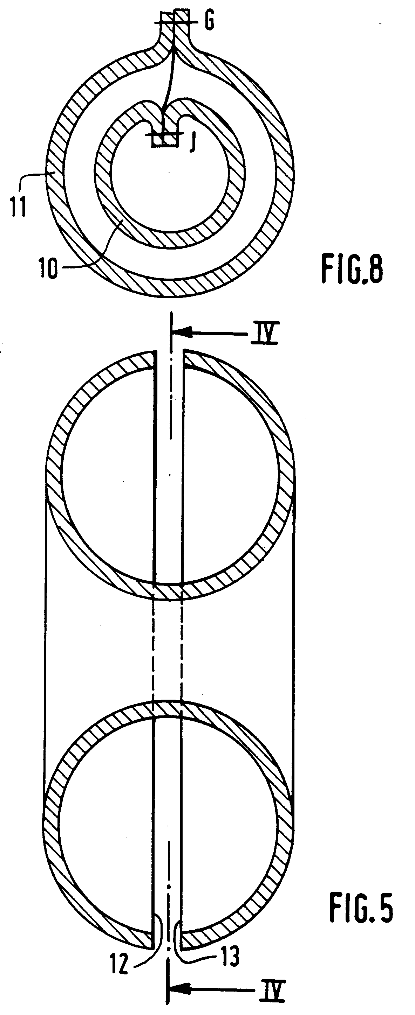

L'ébauche ainsi obtenue est alors retournée pour amener la bordure F-F' du devant 2 en vis à vis de la bordure F-F' de la bande 3. Ces bordures sont amenées en contact endroit sur endroit. On obtient alors sensiblement la forme représentée aux figures 6 et 7 d'un demi-tore intérieur 10 ouvert le long de sa périphérie extérieure, ce demi-tore 10 étant à l'intérieur d'un demi-tore 11, lui aussi ouvert le long de sa périphérie extérieure. Les deux demi-tores se raccordent à leurs extrémités.

L'ouverture du demi-tore intérieur 10 délimite deux lèvres 12 et 13, tandis que l'ouverture du demi-tore 11 est délimitée par deux lèvres 12' et 13'. Les lèvres 12 et 12' se rejoignent à leurs extrémités, de même que les lèvres 13 et 13'.

On commence ainsi à coudre endroit sur endroit le dos 2 et la bande 3, par exemple de F en F'. On continue alors la couture cette fois-ci entre le devant 2 et la bande supérieure 1 de F' vers G puis vers F jusqu'à compléter le tour du devant 2. A cet effet, on fait progressivement sortir le demi-tore intérieur 10 du demi-tore extérieur 11 du côté de leur extrémité proche du point F', comme illustré par les flèches A. Simultanément, à l'autre extrémité des demi-tores, on fait rentrer le demi-tore extérieur 11 à son propre intérieur, comme illustré par les flèches B.

On obtient finalement la structure de la figure 8 montrant les deux demi-tores 10 et 11 emboîtés et cousus, cette vue en coupe étant prise au niveau du point G et du point J, milieu de F-F'. Il est alors possible de retourner entièrement la pièce de la figure 8 en la faisant toute entière traverser l'orifice ménagé entre les points H et H' de manière à obtenir la structure telle qu'elle est représentée à la figure 2.

Cette structure est alors placée dans un moule, avec les tiges de montage 14 engagées dans des trous 15 de la bande 3. De la mousse est alors injectée par un trou 16 de cette même bande afin d'obtenir l'appui-tête fini.

Au cours de cette dernière opération, les languettes (prolongements) 7 et 8 qui font saillie à l'intérieur du volume de l'appui-tête sont prises dans la masse de la mousse, ce qui a pour effet de fermer l'orifice de retournement.

## Revendications

1. Procédé de réalisation d'une enveloppe torique, notamment pour appui-tête pour siège de véhicule automobile, caractérisé par le fait qu'il comprend les étapes consistant à :
a) former dans le matériau de l'enveloppe, une ébauche constituée d'un tore ouvert le long de deux lèvres(12, 12', 13, 13') à sa périphérie extérieure, les coutures de l'ébauche, endroit sur endroit, étant à l'intérieur du tore ;
b) retourner l'ébauche pour la mettre sur son envers en ramenant un demi-tore à l'intérieur de l'autre demi-tore, avec les deux lèvres de nouveau en vis à vis ;
c) coudre les deux lèvres endroit sur endroit en faisant, au fur et à mesure que cela est nécessaire, sortir le demi-tore intérieur du demi-tore extérieur à une de leurs extrémités, tout en ramenant le demi-tore extérieur à son intérieur à l'autre extrémité ;
d) retourner la pièce ainsi obtenue en la faisant traverser un orifice (H, H') préalablement ménagé à cet effet dans sa surface.

2. Procédé selon la revendication 1, dans lequel ledit orifice est ménagé le long d'une couture, soit lors de l'étape a), soit lors de l'étape c).

3. Procédé selon la revendication 2, dans lequel les lèvres en vis à vis sont munies de prolongements (7, 8) à l'emplacement dudit orifice.

## Claims

1. Process for making a toric envelope, especially for a car head rest characterised by the fact that it comprises stages which consist of:
a) form in the envelope material a rough shape formed from an open torus along two lips (12, 12', 13, 13') on its outer periphery, the seams of the rough shape, one place on the other, being inside the torus;
b) turn the rough shape so that it is inside out bringing one semi-torus inside the other semi-torus with the two lips again being opposite;
c) sew the two lips, one placed on the other, by, wherever necessary, bring the semi-torus from the inside of the outer torus to one of the extremes whilst bringing the outer semi-torus to its inside at the other extreme;
d) turn the parts thus obtained by making it go through an orifice (H, H') previously fitted in its surface for this purpose.

2. Procedure according to claim 1 in which the said orifice is fitted along the seam either during stage a) or during stage c).

3. Procedure according to claim 2 in which the lips opposite one another are fitted with extensions (7, 8) in the location of the said orifice.

## Patentansprüche

1. Verfahren zum Herstellen einer toroidförmigen Umhüllung, insbesondere für eine Kopfstütze eines Fahrzeugsitzes, **gekennzeichnet durch** die folgenden Schritte:
a) Ausbilden eines Rohlings aus dem Umhüllungsmaterial, welcher einen Torus umfaßt, der entlang den beiden Lippen (12, 12', 13, 13') am Außenumfang offen ist, wobei die Nähte des Rohlings stellenweise im Inneren des Torus liegen;
b) Wenden des Rohlings, um diesen auf die Rückseite zu drehen, indem ein Halbtorus im Inneren des anderen Halbtorus zurückgeführt wird, wobei die beiden Lippen in neuer Anordnung einander gegenüberliegen;
c) stellenweises Zusammennähen der beiden Lippen entsprechend und nach Maßgabe sowie ausgehend von dem inneren Halbtorus zu dem äußeren Halbtorus zur Ausbildung einer der Enden, wobei der äußere Halbtorus in seinem Inneren am anderen Ende zurückgeführt wird;
d) Wenden des so erhaltenen Teils unter Durchgang durch eine Öffnung (H, H'), welche zuvor hierzu auf der Oberfläche angebracht ist.

2. Verfahren nach Anspruch 1, bei dem die Öffnung entlang einer Naht entweder im Schritt a) oder im Schritt c) vorgesehen wird.

3. Verfahren nach Anspruch 2, bei dem die gegenüberliegenden Lippen an der Stelle der Öffnung mit Verlängerungen (7, 8) versehen sind.
